# EUROPEAN PATENT APPLICATION

(11) **EP 2 096 522 A2**
(43) Date of publication of application: **02.09.2009**
(21) Application number: 09002768.1
(22) Date of filing: 26.02.2009
(51) Int. Cl.: G06F 3/033, G06F 3/048, G06F 1/16

(54) **Terminal device, terminal system and computer-readable recording medium recording program**

(30) Priority: 29.02.2008 JP 2008050859
(71) Applicant: Brother Kogyo Kabushiki Kaisha, Nagoya-shi, Aichi-ken 467-8561 (JP)
(72) Inventor: Suzuki, Hiroaki, Nagoya-shi Aichi-ken 467-8561 (JP)
(74) Representative: Kuhnen & Wacker

(57) **Abstract**

A terminal device displays an image such that an operation part is positioned on a right side of the terminal device when image information is first-kind information indicating that an operation part is on a right side or a left side and a right-hand operation mode in which the operation part is operated by a user' s right hand is set. A terminal device displays an image such that an operation part is positioned on a left side of the terminal device when image information is the first-kind information and a left-hand operation mode in which the operation part is operated by a user's left hand is set. A terminal device displays an image such that an operation part is positioned on a user' s side of the terminal device when image information is second-kind information indicating that the operation part is on a deep side of the terminal device.

## Description

### TECHNICAL FIELD

The present invention relates to a terminal device, and more particularly to a terminal device which includes a display part having a display region whose long-side length and a short-side length differ from each other, and an operation part which is arranged along at least one side of the display region.

### BACKGROUND ART

Conventionally, there has been known a terminal device which includes a display part for displaying an image, an operation part which is operable by a user, and a control part which controls displaying of an image on the display part in response to an operation of the operation part. Particularly, a portable terminal device such as amobile phone or a PDA (Personal Digital Assistant) is popularly used because of handiness thereof.

In such a terminal device, an operation button switch is arranged in the vicinity of a display region of a display part in general. However, recently, a terminal device having a display region formed of a touch panel has been developed.

To enhance the operability of such a terminal device having the display region formed of the touch panel, for example, JP-A-8-221365 discloses a terminal device capable of setting a dominant hand. In such a terminal device, in inputting instructions with a pen using a right hand, a scroll bar is displayed on a right side of the terminal device, while in inputting instructions with a pen using a left hand, the scroll bar is displayed on a left side of the terminal device so that the position of the operation is changed depending on the dominant hand of a user thus enhancing operability of the terminal device.

### DISCLOSURE OF THE INVENTION

In the above-mentioned terminal device, a user is requested to change a holding mode depending on whether an image to be displayed is a longitudinally elongated image or a laterally elongated image or depending on whether the terminal device is held in the longitudinal direction or in the lateral direction. In such a case, there exists possibility that the scroll bar or the like is displayed in the direction different from a user's side depending on the dominant hand of the user and hence, it is difficult for the user to operate the terminal device, and this difficulty in operation may cause an erroneous operation.

The present invention has been made to overcome the above-mentioned drawbacks, and it is an object of the present invention to provide a terminal device, a terminal system and a recording medium which records programs of the computer which can enhance operability of an operation part corresponding to an operation mode such as set dominant hand information or image-kind information indicative of a kind of an image to be displayed.

To achieve the above-mentioned object, according to one aspect of the present invention, there is provided a terminal device which includes: a housing; an image data memory part which is configured to store image data; a display part which is mounted on the housing and has a display region whose long-side length and short-side length differ from each other; a display control part which is configured to perform a control of displaying an image on the display region based on the image data in the image data memory part; and an operation part which is mounted on at least one end of the housing, is arranged along at least one side of the display region, and is configured to be operable by a user, wherein the operation part includes an operation mode setting part which is configured to set either one of a right-hand operation mode in which the operation part is operated by a right hand of the user and a left-hand operation mode in which the operation part is operated by a left hand of the user, the image data memory part is configured to store, as image kind information, either one of first-kind image information which allows the user to observe the image in a holding mode in which the operation part is positioned on either one of left and right sides of the housing and second-kind image information which allows the user to observe the image in a holding mode in which the operation part is positioned on a deep side of the housing corresponding to the respective image data; the display control part is, in a state in which the image kind information which corresponds to the image data of an image to be displayed on the display region is the first-kind image information and the right-hand operation mode is set by the operation mode setting part, configured to perform a control of displaying the image at an angle which allows the user to observe the image in the holding mode in which the operation part is positioned on a right side of the housing, the display control part is, in a state in which the image kind information which corresponds to the image data of an image to be displayed on the display region is the first-kind image information and the left-hand operation mode is set by the operation mode setting part, configured to perform a control of displaying the image at an angle which allows the user to observe the image in the holding mode in which the operation part is positioned on a left side of the housing, and the display control part is, in a state in which the image kind information which corresponds to the image data of an image to be displayed on the display region is the second-kind image information and either one of the left-hand operation mode and the right-hand operation mode is set by the operation mode setting part, configured to perform a control of displaying the image at an angle which allows the user to observe the image in the holding mode in which the operation part is positioned on a user' s side of the housing.

Due to such constitution, the image can be displayed at the angle which positions the operation part on a left or right side or a user' s side corresponding to the operation mode based on the operation mode indicative of a dominant hand or the like and the image-kind information of the image to be displayed such as an image having different longitudinal and lateral lengths and hence, it is possible to prevent the operation part from being positioned on a deep side of the display region thus enhancing operability of the operation part of the terminal device.

The operation part may be configured to perform plural kinds of operations corresponding to operation modes of the user, and may include an operation assignment control part which performs assignment of control contents corresponding to the operation modes of the operation part based on the image kind information corresponding to the image data of the image to be displayed on the display region and the operation modes set by the operation mode setting part.

Due to such constitution, the assignment of control contents corresponding to the image kind information and the operation mode can be performed thus facilitating the operation of the terminal device.

The operation part may be a cross operation part which is configured to be operable at least in crosswise directions, and the operation assignment control part may be configured to perform the assignment of the control contents corresponding to the operation directions of the cross operation part based on the image kind information corresponding to the image data of the image to be displayed on the display region and the operation modes set by the operation mode setting part.

Due to such constitution, the assignment of control contents corresponding to the image kind information and the operation mode can be performed thus facilitating the operation of the terminal device.

The operation assignment control part may be configured to perform the assignment such that the control contents corresponding to the operation directions of the cross operation part become equal between a state in which the image kind information which corresponds to the image data of an image to be displayed on the display region is the first-kind image information and the operation part is positioned on either one of left and right sides of the housing and a state in which the image kind information which corresponds to the image data of an image to be displayed on the display region is the second-kind image information and the operation part is positioned on a user' s side of the housing.

Due to such constitution, the user can operate the terminal device without being conscious of the holding mode and hence, the operability of the terminal device can be enhanced.

The operation part may be arranged along a long side of the display region, and the image data memory part may be configured to store longitudinally-elongated image data corresponding to the first-kind image information and laterally-elongated image data corresponding to the second-kind image information.

The operation part may be arranged along a short side of the display region, and the image data memory part may be configured to store laterally-elongated image data corresponding to the first-kind image information and longitudinally-elongated image data corresponding to the second-kind image information.

To achieve the above-mentioned object, according to another aspect of the present invention, there is provided a terminal system which includes, in addition to the above-mentioned terminal device, a computer device which is configured to output the image data of the image to be displayed on the display region of the terminal device to the terminal device in a state that the image kind information is added to the image data.

Due to such constitution, by merely outputting the image data to the terminal device from the computer, it is possible to easily form the image data used by the terminal device.

### BRIEF DESCRIPTION OF THE DRAWINGS

Figs. 1A and 1B are explanatory views showing a terminal device according to one embodiment of the invention;
Figs. 2A, 2B and 2C are explanatory views showing a terminal device according to one embodiment of the present invention;
Figs. 3A to 3E are explanatory views showing a terminal device according to one embodiment of the present invention;
Figs. 4A to 4F are explanatory views showing a terminal device according to one embodiment of the present invention;
Fig. 5 is a block diagram showing a terminal device according to one embodiment of the present invention;
Fig. 6 is a functional block diagram showing the terminal device and a personal computer according to one embodiment of the present invention;
Fig. 7 is an explanatory view showing a set data table in the terminal device according to one embodiment of the present invention;
Fig. 8 is an explanatory view showing a raster data setting table in the terminal device according to one embodiment of the present invention;
Fig. 9 is an explanatory view showing a key assignment setting table in the terminal device according to one embodiment of the present invention;
Figs. 10A and 10B are flowcharts showing control processing executed in the terminal device according to one embodiment of the present invention;
Figs. 11A and 11B are flowcharts showing control processing executed in the terminal device according to one embodiment of the present invention;
Fig. 12 is a flowchart showing control processing executed in the terminal device according to one embodiment of the present invention;
Figs. 13A to 13F are explanatory views showing the terminal device according to one embodiment of the present invention;
Fig. 14 is an explanatory view showing a key assignment setting table in the terminal device according to one embodiment of the present invention;
Figs. 15A and 15B are flowcharts showing control processing executed in the terminal device according to one embodiment of the present invention;
Figs. 16A and 16B are explanatory views showing the terminal device according to one embodiment of the present invention;
Figs. 17A to 17F are explanatory views showing the terminal device according to one embodiment of the present invention;
Fig. 18 is an explanatory view showing a key assignment setting table in the terminal device according to one embodiment of the present invention;
Figs. 19A and 19B are flowcharts showing control processing executed in the terminal device according to one embodiment of the present invention; and
Figs. 20A and 20B are explanatory views showing the terminal device according to one embodiment of the present invention.

### BEST MODE FOR CARRYING OUT THE INVENTION

Preferred embodiments of the present invention are explained hereinafter in conjunction with attached drawings.

### [1. Constitution or the like of terminal device]

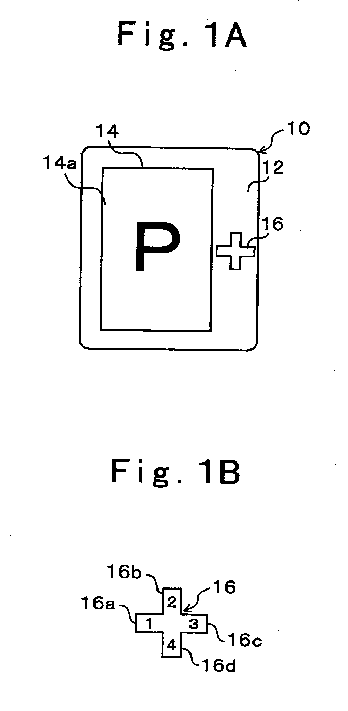

First of all, the schematic constitution or the like of a terminal device 10 is explained in conjunction with Fig. 1.

Fig. 1 is a view showing an example of the schematic constitution of the terminal device 10 according to this embodiment. As shown in Fig. 1A, the terminal device 10 according to this embodiment is a device which exhibits high portability, and also is a device which displays raster data such as various image data. Further, the terminal device 10 is constituted of a housing 12, a display device 14 and a cross button switch 16.

The housing 12 is formed in a rectangular shape, and the display device 14 is arranged at the center of the housing 12. Further, the cross button switch 16 is arranged at one end of the housing 12.

The display device 14 is arranged at the center of the housing 12. The display device 14 has a rectangular display region 14a where a longitudinal length and a lateral length differ from each other. That is, the display device 14 which constitutes a display part is mounted on the housing 12, and has the display region 14a where a length of long sides and the length of short sides differ from each other.

The cross button switch 16 constitutes an operation part which is operable by a user. The cross button switch 16 is arranged at least one end of the housing 12 and, at the same time, the cross button switch 16 is arranged along at least one side of the display region 14a of the display device 14. The cross button switch 16 is a cross operation part which is operable inupper, lower, left and right directions (crosswise directions). The cross button switch 16 is, as shown in Fig. 1B, constituted of a left button switch portion 16a, an upper button switch portion 16b, a right button switch portion 16c and a lower button switch portion 16d. The cross button switch 16 is capable of performing plural kinds of operations corresponding to operation modes of the user. Although the cross button switch 16 is arranged along one long side of the display region 14a in this embodiment, the present invention is not limited to such an arrangement of the cross button switch 16.

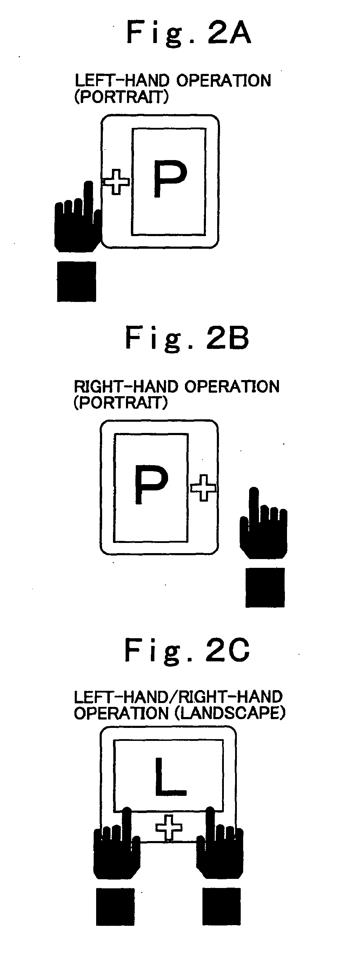

The display modes and the operation modes controlled by the above-mentioned terminal device 10 are explained hereinafter in conjunction with Fig. 2 to Fig. 4.

Further, with respect to this terminal device 10, by rotating the housing 12 in conformity with a direction of an image, the terminal device 10 is arranged in a direction which allows a user to easily observe the image. Further, it is possible to set the dominant hand setting to a right hand or a left hand of the user. The direction of the image may also be changed by such setting. Still further, the direction of the image is also changed depending on whether the direction of the image is for portrait or landscape. "Portrait" is a longitudinally-elongated image, and "landscape" is a laterally-elongated image.

To be more specific, when the left-hand operation is set and the image to be displayed is the portrait image, as shown in Fig. 2A, the image is displayed to allow the user to observe the image from a user' s side in a holding mode in which the cross button switch 16 is arranged on a left side of the housing 12.

Further, when the right-hand operation is set and the image to be displayed is the portrait image, as shown in Fig. 2B, the image is displayed to allow the user to observe the image from a user's side in a holding mode in which the cross button switch 16 is arranged on a right side of the housing 12.

Further, when the image to be displayed is the landscape image, irrespective of setting of a dominant hand, as shown in Fig. 2C, the image is displayed in a direction (at an angle) which allows the user to observe the image in a holding mode in which the cross button switch 16 is positioned on a user's side of the housing 12.

By displaying the image in such a manner, the image is displayed at the angle corresponding to the operation mode. This angle is determined based on the operation mode indicative of the dominant hand or the like and the orientation information (image kind information) of the image having different longitudinal and lateral lengths. Particularly, this angle is an angle at which the operation part is positioned on either one of left and right sides or the user's side. Due to such constitution, it is possible to prevent the operation part from being positioned on a deep side of the display region thus enhancing the operability of the terminal device 10.

Further, the cross button switch 16 is provided with a key assignment function which allocates the respective button switch portions corresponding to operations. The key assignment function of the cross button switch 16 is changed depending on setting of the dominant hand and a kind (portrait, landscape) of the image.

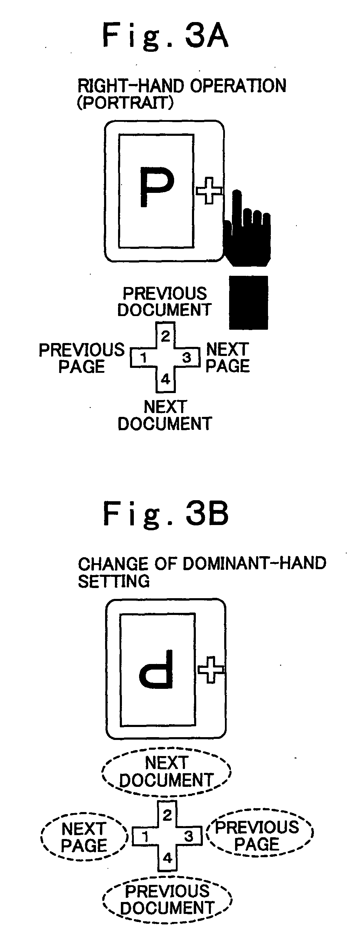

To be more specific, when the right-hand operation is set and the image to be displayed is the portrait image, as shown in Fig. 3A, a previous page is assigned to the left button switch portion 16a, a previous document is assigned to the upper button switch portion 16b, a next page is assigned to the right button switch portion 16c, and a next document is assigned to the lower button switch portion 16d. Then, when the cross button switch 16 is operated in the left direction (the left direction as viewed from a user's side, expressed in the same manner hereinafter also with respect to the upper direction, the right direction and the lower direction) by the user, the previous page is displayed, when the cross button switch 16 is operated in the upper direction by the user, the previous document is displayed. , when the cross button switch 16 is operated in the right direction by the user, the next page is displayed and when the cross button switch 16 is operated in the lower direction by the user, the next document is displayed.

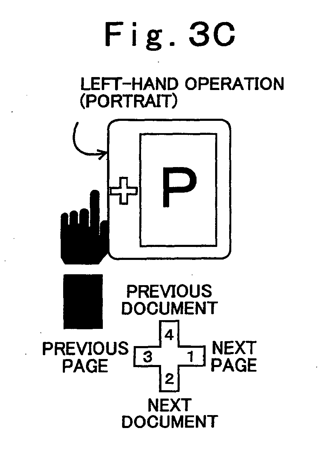

Then, when the setting of operation is changed from the right-hand operation to the left-hand operation, as shown in Fig. 3B, the image per se is rotated by 180 degrees. Further, the next page is assigned to the left button switch portion 16a, the next document is assigned to the upper button switch portion 16b, the previous page is assigned to the right button switch portion 16c, and the previous document is assigned to the lower button switch portion 16d. Due to such operations, to allow the user to observe the image, as shown in Fig. 3C, the housing 12 is rotated by 180 degrees. Further, the terminal device 10 assumes a holding mode in which the cross button switch 16 is positioned on a left side of the housing 12. Then, when the cross button switch 16 is operated in the left direction by the user, the previous page is displayed, when the cross button switch 16 is operated in the upper direction by the user, the previous document is displayed, when the cross button switch 16 is operated in the right direction by the user, the next page is displayed and when the cross button switch 16 is operated in the lower direction by the user, the next document is displayed.

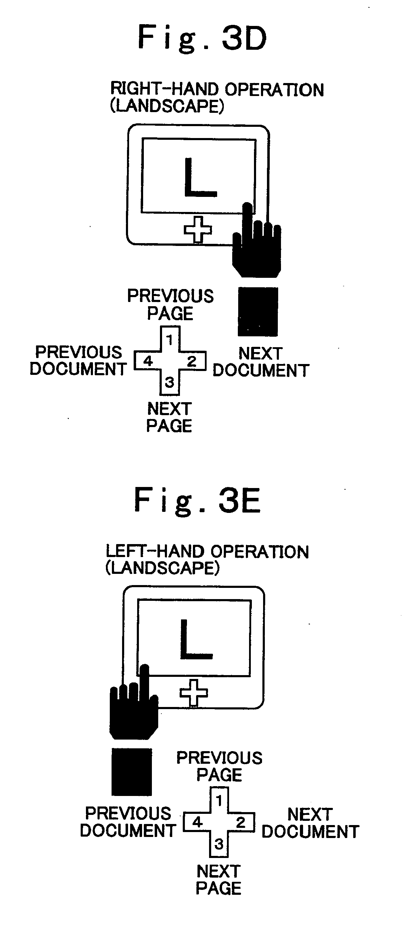

Further, in case the right-hand operation is set and the image to be displayed is the landscape image, as shown in Fig. 3D, when the cross button switch 16 is operated in the left direction by the user, the previous document is displayed, when the cross button switch 16 is operated in the upper direction by the user, the previous page is displayed, when the cross button switch 16 is operated in the right direction by the user, the next document is displayed and when the cross button switch 16 is operated in the lower direction by the user, the next page is displayed. Further, when the left-hand operation is set and the image to be displayed is the landscape image, as shown in Fig. 3E, a key assignment function equal to the key assignment function set at the time of performing the right-hand operation is given to the cross button switch 16.

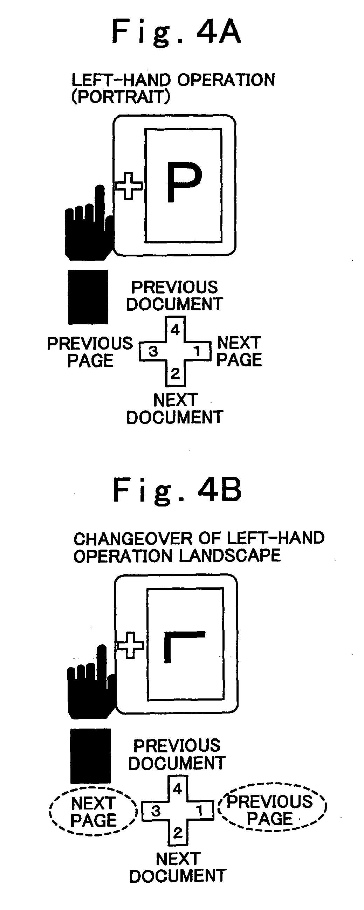

Further, when the left-hand operation is set and the image to be displayed is the portrait image, as shown in Fig. 4A, the next page is assigned to the left button switch portion 16a, the next document is assigned to the upper button switch portion 16b, the previous page is assigned to the right button switch portion 16c, and the previous document is assigned to the lower button switch portion 16d. Then, when the cross button switch 16 is operated in the left direction by the user, the previous page is displayed, when the cross button switch 16 is operated in the upper direction by the user, the previous document is displayed, when the cross button switch 16 is operated in the right direction by the user, the next page is displayed and when the cross button switch 16 is operated in the lower direction by the user, the next document is displayed.

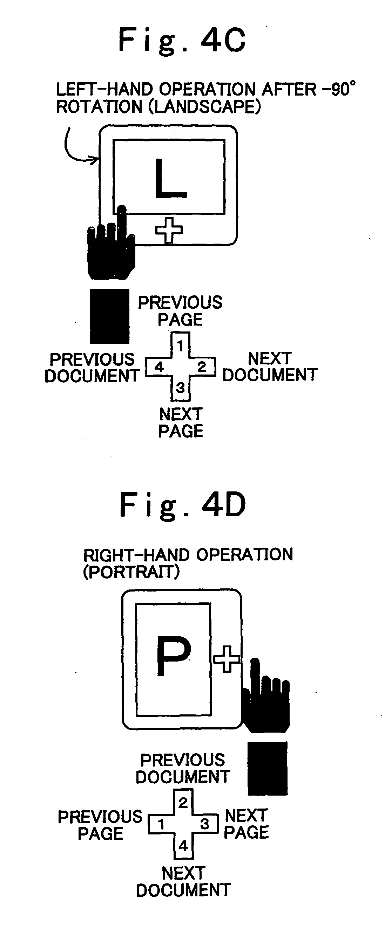

Then, when the image to be displayed is changed to the landscape, as shown in Fig. 4B, the image per se is rotated by 90 degrees. Further, the previous page is assigned to the left button switch portion 16a, and the next page is assigned to the right button switch portion 16c. Due to such operations, to allow the user to observe the image, as shown in Fig. 4C, the housing 12 is rotated by -90 degrees. Further, the terminal device 10 assumes a holding mode in which the cross button switch 16 is positioned on a user' s side of the housing 12. Then, when the cross button switch 16 is operated in the left direction by the user, the previous document is displayed, when the cross button switch 16 is operated in the upper direction by the user, the previous page is displayed, when the cross button switch 16 is operated in the right direction by the user, the next document is displayed and when the cross button switch 16 is operated in the lower direction by the user, the next page is displayed.

Further, when the right-hand operation is set and the image to be displayed is the portrait image, as shown in Fig. 4D, the previous page is assigned to the left button switch portion 16a, the previous document is assigned to the upper button switch portion 16b, the next page is assigned to the right button switch portion 16c, and the next document is assigned to the lower button switch portion 16d. Then, when the cross button switch 16 is operated in the left direction by the user, the previous page is displayed, when the cross button switch 16 is operated in the upper direction by the user, the previous document is displayed, when the cross button switch 16 is operated in the right direction by the user, the next page is displayed and when the cross button switch 16 is operated in the lower direction by the user, the next document is displayed.

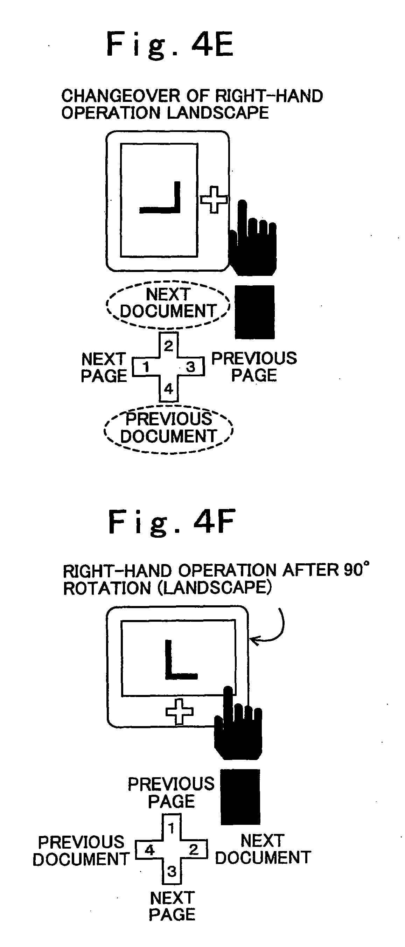

Then, when the image to be displayed is changed to the landscape, as shown in Fig. 4E, the image per se is rotated by -90 degrees. Further, the next document is assigned to the upper button switch portion 16b, and the previous document is assigned to the lower button switch portion 16d. Due to such operations, to allow the user to observe the image, as shown in Fig. 4F, the housing 12 is rotated by 90 degrees. Further, the terminal device 10 assumes a holding mode in which the cross button switch 16 is positioned on a user' s side of the housing 12. Then, when the cross button switch 16 is operated in the left direction by the user, the previous document is displayed, when the cross button switch 16 is operated in the upper direction by the user, the previous page is displayed, when the cross button switch 16 is operated in the right direction by the user, the next document is displayed and when the cross button switch 16 is operated in the lower direction by the user, the next page is displayed.

By changing the key assignment in this manner, it is possible to perform the assignment of control contents corresponding to kinds of images (image kind information such as portrait, landscape and the like) and the operation modes and hence, the control of the terminal device 10 canbe simplified. Further, the user can operate the terminal device 10 without being conscious of the holding mode and hence, the operability of the terminal device 10 can be enhanced.

### [2. Explanation of constitution or the like of terminal device 10]

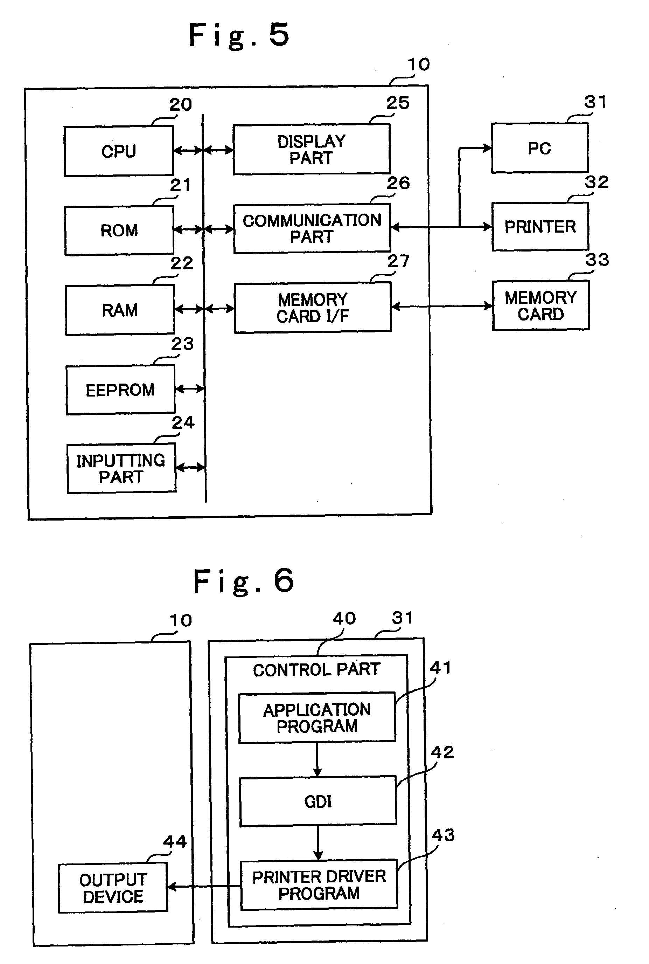

Next, the constitution and the manner of operation of the terminal device 10 are explained in conjunction with Fig. 5.

Fig. 5 shows an example of the schematic constitution of the terminal device 10 of this embodiment. A general-type portable computer is applicable to the terminal device 10 and, as shown in Fig. 5, the terminal device 10 is constituted of a CPU (Central Processing Unit) 20, a ROM (Read Only Memory) 21, a RAM (Random Access Memory) 22, an EEPROM (Electrically Erasable and Programmable Read Only Memory) 23, an inputting part 24, a display part 25, a communication part 26 and a memory card interface (a memory card I/F) 27. These respective constitutional elements are connected with each other via a system bus.

The CPU 20 functions as various units in accordance with various programs and controls the terminal device 10. Various programs and the like are recorded (stored) in the ROM 21. The RAM 22 is a storage medium which temporarily stores various data and the like. The EEPROM 23 is a storage medium which can store data and, at the same time, can electrically erase the stored data. The inputting part 24 controls an inputting unit such as the cross button switch 16 capable of inputting predetermined information. The display part 25 is constituted of the display device 14 and the like which displays an image. The communication part 26 performs communication between the terminal device 10 and other devices such as a personal computer (PC in the drawing) 31 and a printer 32. The memory card interface 27 performs communication between the terminal device 10 and a memory card 33.

Fig. 6 is a functional block diagram for forming an image using the terminal device 10 of this embodiment and the personal computer 31.

The personal computer 31 includes, as shown in Fig. 6, a control part 40 which is constituted of a CPU, a ROM, a RAM and the like. Further, the control part 40 outputs rendered image data to an output device 44 in accordance with application program 41, a GDI (Graphics Device Interface) 42 and a printer driver program 43. In this embodiment, the terminal device 10 includes the output device 44. Here, the printer driver program 43 is stored in the RAM of the personal computer 31 via a storage medium drive of the personal computer 31 not shown in the drawing.

The control part 40, upon receiving display instruction of raster data based on the application program 41, receives printing setting, printing data, orientation information and the like from the application program 41 via the GDI 42. Then, the control part 40 renders the printing data in accordance with the printer driver program 43 and forms image data. Then, the control part 40 outputs image data to the output device 44 in association with the orientation information indicative of image in accordance with the printer driver program 43.

In this manner, the personal computer 31 outputs the orientation information (image kind information) indicative of kinds of images to the terminal device 10 in a form that the orientation information is added to the image data. Accordingly, by merely outputting the image data to the terminal device 10 from the personal computer 31, it is possible to easily form the image data to be used in the terminal device 10.

### (Set data table)

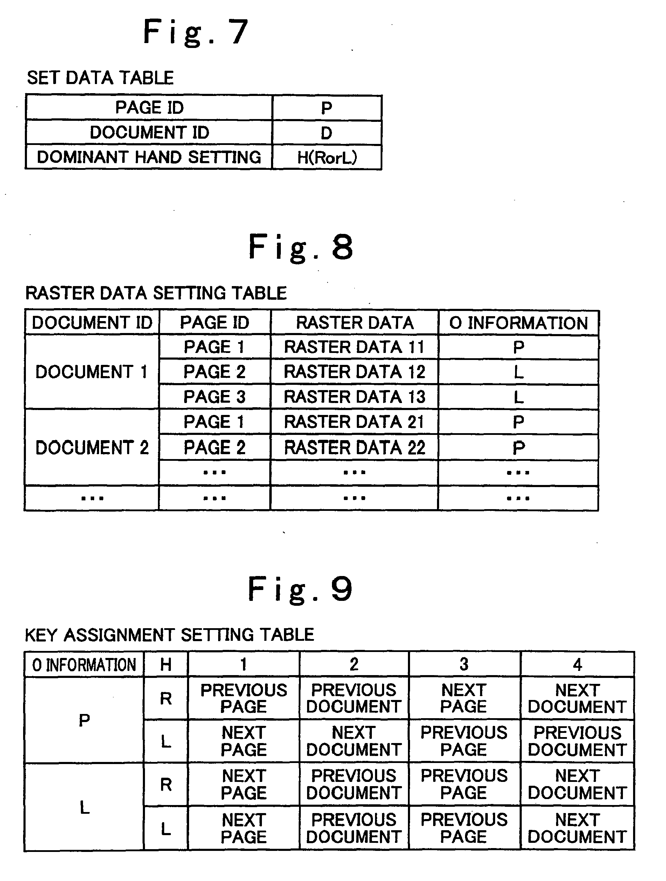

The set data table which is stored in the EEPROM 23 of the terminal device 10 having the above-mentioned constitution is explained in conjunction with Fig. 7. Even when the set data table explained hereinafter is not stored in the EEPROM 23, it is sufficient that data and program having such functions are stored in the EEPROM 23.

The set data table stored in the EEPROM 23 is the table which stores set data relating to raster data to be displayed or set data relating to a dominant hand. In the set data table, as shown in Fig. 7, a page ID and a document ID of raster data to be displayed and setting of the dominant hand are stored in a correlated manner.

By referencing such a set data table, the document and the page to be displayed and setting of the dominant hand to be set can be recognized.

### (Raster data setting table)

The raster data setting table stored in the EEPROM 23 of the terminal device 10 having the above-mentioned constitution is explained in conjunction with Fig. 8. Even when the raster data setting table explained hereinafter is not stored in the EEPROM 23, it is sufficient that data and programs having such functions are stored in the EEPROM 23.

The raster data setting table stored in the EEPROM 23 is a table in which data relating to a displayable raster data is set. In the raster data setting table, as shown in Fig. 8, a document ID, a page ID, raster data and orientation information (for example, portrait, landscape or the like) are correlated to each other. The document ID is information which enables identification of a document on raster data. The page ID is information which enables identification of a page of raster data in such a document ID. Further, raster data includes file names indicative of raster data, addresses and the like, and raster data per se is also stored in the EEPROM 23 per se. Further, orientation information is information which enables the identification whether the raster data is data on the longitudinally-elongated portrait image or data on the laterally-elongated landscape image.

By referencing this raster data setting table, it is possible to recognize the raster data per se or the orientation information of the raster data or the like. The EEPROM 23 functions as an image data memory part. That is, in the EEPROM 23, either one of the portrait image and the landscape image is stored as the orientation information (image kind information) corresponding to each image data. Further, the portrait image (longitudinally-elongated image data, the first kind image information) is an image which is observed by the user in a holding mode in which the cross button switch 16 (operation part, cross operation part) is positioned on a left or right side of the housing 12. On the other hand, the landscape image (laterally-elongated image data, the second kind image information) is an image which is observed by the user in a holding mode in which the cross button switch 16 is positioned on a deep side of the housing 12. (Key assignment setting table)

The key assignment setting table stored in the EEPROM 23 of the terminal device 10 having the above-mentioned constitution is explained in conjunction with Fig. 9. Even when the key assignment setting table explained hereinafter is not stored in the EEPROM 23, it is sufficient that data and programs having such functions are stored in the EEPROM 23.

The key assignment setting table stored in the EEPROM 23 is a table which shows key assignment in using the cross button switch 16. In the key assignment setting table, as shown in Fig. 9, the orientation information, dominant hand setting and kinds of keys are stored in a correlated manner.

To be more specific, when the orientation information is portrait and dominant hand setting is set as a right hand, a previous page is assigned to the left button switch portion 16a, a previous document is assigned to the upper button switch portion 16b, a next page is assigned to the right button switch portion 16c, and a next document is assigned to the lower button switch portion 16d. On the other hand, when the orientation information is portrait and dominant hand setting is set as a left hand, a next page is assigned to the left button switch portion 16a, a next document is assigned to the upper button switch portion 16b, a previous page is assigned to the right button switch portion 16c, and a previous document is assigned to the lower button switch portion 16d. When the orientation information is a landscape, irrespective of whether the dominant hand setting is set as the right hand or the left hand, a next page is assigned to the left button switch portion 16a, a previous document is assigned to the upper button switch portion 16b, a previous page is assigned to the right button switch portion 16c, and a next document is assigned to the lower button switch portion 16d.

In this manner, the assignment of control contents corresponding to the operation directions of the cross button switch 16 (cross operation part) is performed based on the orientation information (image kind information) corresponding to image data of an image to be displayed on the display region 14a and dominant hand setting (operation mode) which is already set. Accordingly, the assignment of control contents corresponding to the image kind information and the operation mode can be performed thus simplifying the operation of the terminal device 10. Further, when the orientation information (image kind information) corresponding to the image data of an image to be displayed on the display region 14a is a portrait, irrespective of dominant hand setting (operation mode), the control content corresponding to the operation direction of the cross button switch 16 (cross operation part) becomes the same. Accordingly, the user can operate the terminal device 10 without being conscious of the holding mode of the terminal device 10 and hence, the operability of the terminal device 10 can be enhanced.

### [3. Operation of terminal device 10]

The detailed operation of the terminal device 10 is further specifically explained hereinafter using flowcharts.

### (Explanation of main processing flow of terminal device 10)

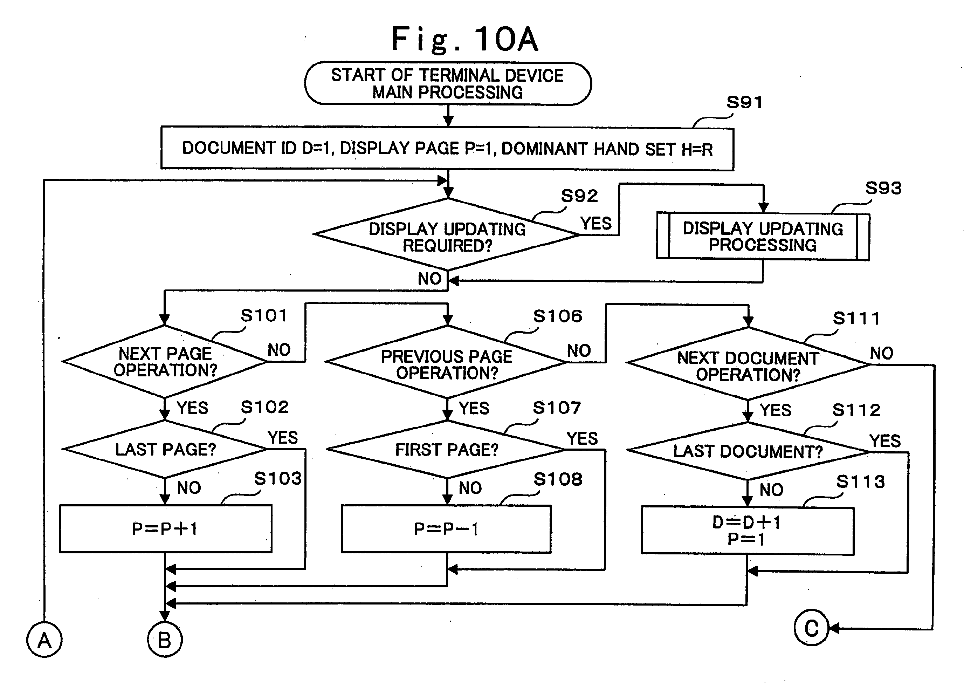

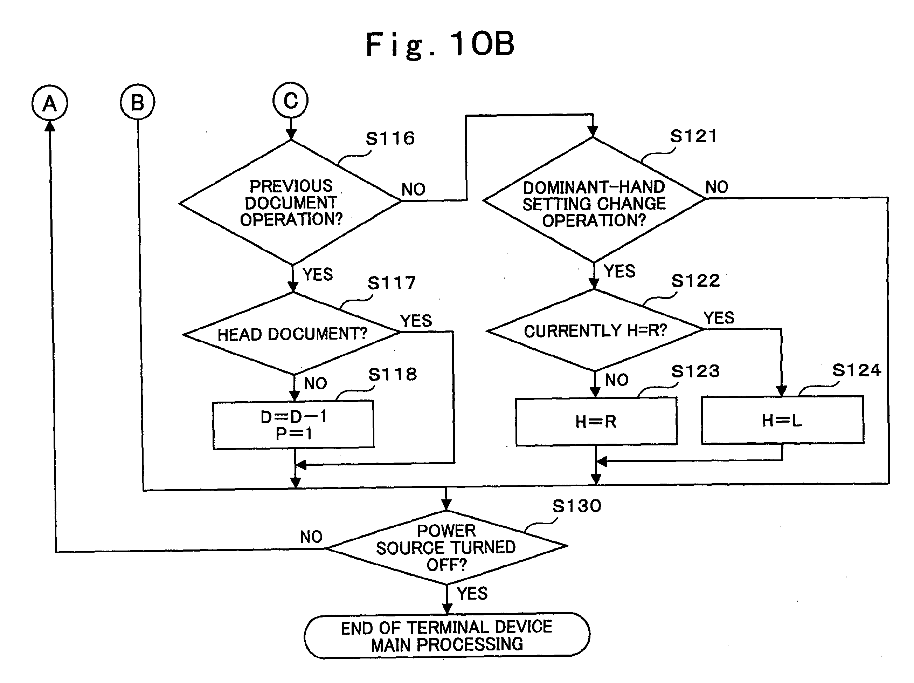

First of all, the further specific operations of the terminal device 10 are explained in conjunction with Fig. 10. Fig. 10 is a flowchart showing the entire processing of the terminal device 10.

First of all, as shown in Fig. 10, when a power source of the terminal device 10 is turned on, the CPU 20 executes initial setting processing such as the permission of access to the ROM 21, the RAM 22 and the EEPROM 23, initializing of working areas and the like. Thereafter, the CPU 20 sets "1" to a document ID which is positioned in a predetermined area of the EEPROM 23 and also sets "1" to a page ID indicative of a page to be displayed which is positioned in a predetermined area of the EEPROM 23 and, at the same time, the dominant hand setting is set as the right hand (step S91). That is, the CPU 20 functions as the operation mode setting part and sets either one of the right-hand operation mode in which the cross button switch 16 is operated by a right hand of a user and the left-hand operation mode in which the cross button switch 16 is operated by a left hand of the user. When the processing in step S91 is finished, the processing advances to step S92.

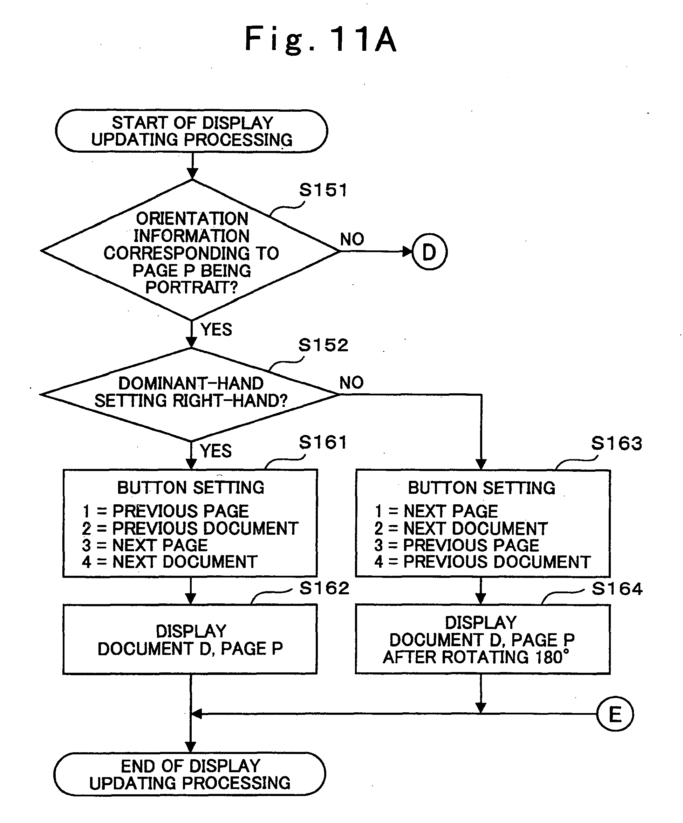

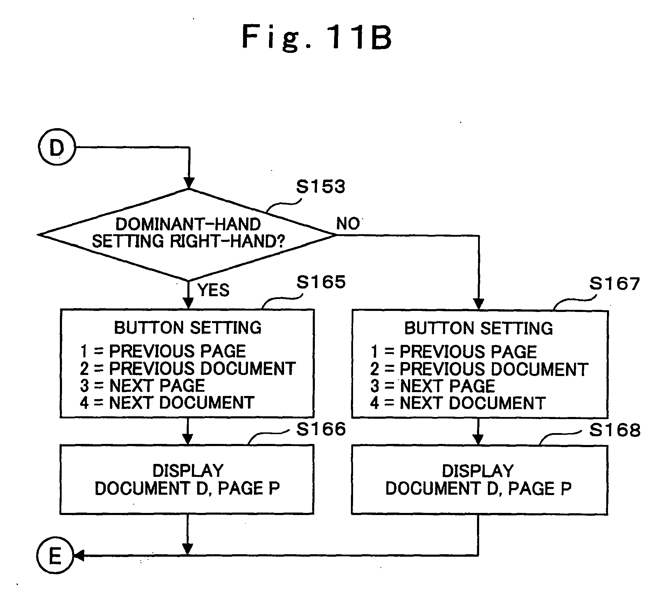

In step S92, the CPU 20 determines whether or not the display updating is required. In this processing, the CPU 20 determines whether or not the display updating is required based on whether or not any one of a first condition that the initial setting processing is performed, a second condition that the page is turned over and a third condition that dominant hand setting is changed is satisfied. When the CPU 20 determines that the display updating is required (step S92: Yes), although explained in detail later in conjunction with Fig. 11, the CPU 20 executes the display updating processing for updating the display (step S93), and the processing advances to step S101. On the other hand, when the CPU 20 determines that the display updating is not required (step S92: No), the processing advances to step S101 without executing processing in step S93.

In step S101, the CPU 20 determines whether or not the next page operation is performed. In this processing, the CPU 20 references the set data table positioned in the predetermined region of the EEPROM 23 (see Fig. 7) and the raster data setting table (see Fig. 8), and reads out the orientation information on raster data corresponding to a current document ID and a current page ID and data on dominant hand setting. Then, the CPU 20 references the key assignment setting table (see Fig. 9) positioned in a predetermined area of the EEPROM 23 and reads out the key assignment information corresponding to the orientation information and the dominant hand setting. Then, the CPU 20 determines whether or not the next page operation is performed based on whether or not the key corresponding to the next page in the key assignment is operated. Further, also in step S106, step S111, step S116 described in detail later, the CPU 20 references the table in the same manner. Then, the CPU 20 reads out the key assignment information corresponding to the orientation information and the dominant hand setting, and performs various determinations corresponding to the key assignment.

When the CPU 20 determines that the next page operation is performed (step S101: YES), the CPU 20 determines whether or not the raster data currently displayed on the display region 14a is of a last page in the same document (step S102). When the CPU 20 determines that the raster data is not of the last page (step S102: NO), the page ID is incremented by "1" (step S103). Further, when the CPU 20 determines that the raster data is of the last page (step S102: YES), the processing advances to step S130 without executing processing in step S103. On the other hand, when the CPU 20 determines that the next page operation is not performed (step S101: NO), the processing advances to step S106.

In step S106, the CPU 20 determines whether or not the previous page operation is performed. In this processing, the CPU 20 reads out the key assignment information corresponding to the orientation information and the dominant hand setting. Then, the CPU 20 determines whether or not the previous page operation is performed based on whether or not the key corresponding to the previous page in the key assignment is operated. When the CPU 20 determines that the previous page operation is performed (step S106: YES), the CPU 20 determines whether or not the raster data currently displayed on the display region 14a is of a first page in the same document (step S107). When the CPU 20 determines that the raster data is not of the first page (step S107: NO), the page ID is decremented by "1" (step S108). Further, when the CPU 20 determines that the raster data is of the first page (step S107: YES), the processing advances to step S130 without executing processing in step S108. On the other hand, when the CPU 20 determines that the previous page operation is not performed (step S106: NO), the processing advances to step S111.

In step S111, the CPU 20 determines whether or not the next document operation is performed. In this processing, the CPU 20 reads out the key assignment information corresponding to the orientation information and the dominant hand setting. Then, the CPU 20 determines whether or not the next document operation is performed based on whether or not the key corresponding to the next document in the key assignment is operated. When the CPU 20 determines that the next document operation is performed (step S111: YES), the CPU 20 determines whether or not the raster data currently displayed on the display region 14a is of a last document in a document list (step S112). Further, when the CPU 20 determines that the raster data is not of the last document in the document list (step S112: NO), the document ID is incremented by "1" and, at the same time, the page ID is set to "1" (step S113). When the CPU 20 determines that the raster data is of the last document in the document list (step S112: YES), the processing advances to step S130 without executing processing in step S113. On the other hand, when the CPU 20 determines that the next document operation is not performed (step S111: NO), the processing advances to step S116.

In step S116, the CPU 20 determines whether or not the previous document operation is performed. In this processing, the CPU 20 reads out the key assignment information corresponding to the orientation information and the dominant hand setting. Then, the CPU 20 determines whether or not the previous document operation is performed based on whether or not the key corresponding to the previous document in the key assignment is operated. When the CPU 20 determines that the previous document operation is performed (step S116: YES), the CPU 20 determines whether or not the raster data currently displayed on the display region 14a is of a head document in a document list (step S117). When the CPU 20 determines that the raster data is not of the head document in the document list (step S117: NO), the document ID is decremented by "1" and, at the same time, the page ID is set to "1" (step S118). When the CPU 20 determines that the raster data is of the head document in the document list (step S117: YES), the processing advances to step S130 without executing processing in step S118. On the other hand, when the CPU 20 determines that the head document operation is not performed (step S116: NO), the processing advances to step S121.

In step S121, the CPU 20 determines whether or not a dominant hand setting change operation is performed. In this processing, when the CPU 20 determines that the dominant hand setting change operation is performed (step S121: YES), the CPU 20 determines whether or not the current dominant hand setting is set as the right hand (step S122). When the CPU 20 determines that the current dominant hand setting is set as the right hand (step S122: YES), the dominant hand setting is changed to the left hand (step S124). Further, when the CPU 20 determines that the current dominant hand setting is the left hand (step S122: NO), the dominant hand setting is changed to the right hand (step S123), and the processing advances to step S130. The CPU 20 functions as an operation mode setting part. That is, the CPU 20 sets either one of the right-hand operation mode in which the cross button switch 16 is operated by a right hand of a user and the left-hand operation mode in which the cross button switch 16 is operated by a left hand of the user. On the other hand, when the CPU 20 determines that the dominant hand setting change operation is not performed (step S121: NO), the processing advances to step S130 without executing processing in step S122 to step S124.

In step S130, the CPU 20 determines whether or not the power source is turned off. In this processing, when the CPU 20 determines that the power source is turned off (step S130: YES), the main processing is finished. On the other hand, when the CPU 20 determines that the power source is not turned off (step S130: NO), the processing advances to step S101.

### (Explanation of display updating processing flow of terminal device 10)

A subroutine executed in step S93 shown in Fig. 10 is explained in conjunction with Fig. 11.

Firstly, as shown in Fig. 11, the CPU 20 determines whether or not the orientation information corresponding to the current page is of a portrait (step S151). In this processing, the CPU 20 references the raster data setting table (see Fig. 8), and reads out the orientation information stored corresponding to the raster data which is to be subject to display updating. Then, the CPU 20 determines whether or not the orientation information corresponding to the current page is of the portrait. When the CPU 20 determines that the orientation information corresponding to the current page is of the portrait (step S151: YES), the processing advances to step S152. On the other hand, when the CPU 20 determines that the orientation information corresponding to the current page is of a landscape (step S151: NO), the processing advances to step S153.

In step S152, the CPU 20 determines whether or not dominant hand setting is set as the right hand. In this processing, the CPU 20 references the set data table (see Fig. 7), and reads out dominant hand setting, and determines whether or not dominant hand setting is set as the right hand.

When the CPU 20 determines that dominant hand setting is set as the right hand (step S152: YES), the CPU 20 performs setting of button switches such that a previous page is assigned to the left button switch portion 16a, a previous document is assigned to the upper button switch portion 16b, a next page is assigned to the right button switch portion 16c, and a next document is assigned to the lower button switch portion 16d (step S161). The CPU 20 functions as an operation assignment control part. That is, the CPU 20 performs the assignment of control contents corresponding to operation directions of the cross button switch 16 (cross operation part) based on the orientation information (image kind information) corresponding to image data of an image to be displayed on the display region 14a and dominant hand setting (operation mode) which is already set. Further, the CPU 20 performs a control of keeping display of raster data on a predetermined page in a designated document (step S162), and the main subroutine is finished. The CPU 20 functions as a display control part. That is, in case the orientation information (image kind information) corresponding to image data of an image to be displayed on the display region 14a is a portrait (first kind image information), when the dominant hand setting is set as the right hand (the right-hand operation mode), the CPU 20 can perform a control of displaying the image at an angle which allows a user to observe the display region in a holding mode in which the cross button switch 16 (operation part) is positioned on a right side of the housing 12.

On the other hand, when the CPU 20 determines that dominant hand setting is set as the left hand (step S152: NO), the CPU 20 performs setting of button switches such that a next page is assigned to the left button switch portion 16a, a next document is assigned to the upper button switch portion 16b, a previous page is assigned to the right button switch portion 16c, and a previous document is assigned to the lower button switch portion 16d (step S163). The CPU 20 functions as an operation assignment control part. That is, the CPU 20 performs the assignment of control contents corresponding to operation directions of the cross button switch 16 (cross operation part) based on the orientation information (image kind information) corresponding to image data of an image to be displayed on the display region 14a and dominant hand setting (operation mode) which is already set. Further, the CPU 20 performs a control of displaying of raster data on a predetermined page of a designated document by rotating 180 degrees (step S164), and the main subroutine is finished. The CPU 20 functions as a display control part. That is, in case the orientation information (image kind information) corresponding to image data of an image to be displayed on the display region 14a is a portrait (first kind image information), when the dominant hand setting is set as the left hand (the left-hand operation mode), the CPU 20 can perform a control of displaying the image at an angle which allows a user to observe the display region in a holding mode in which the cross button switch 16 (operation part) is positioned on a left side of the housing 12.

Further, in step S153, the CPU 20, in the same manner as the above-mentioned step S152, determines whether or not dominant hand setting is set as the right hand.

When the CPU 20 determines that dominant hand setting is set as the right hand (step S153: YES), the CPU 20 performs setting of button switches such that a previous page is assigned to the left button switch portion 16a, a previous document is assigned to the upper button switch portion 16b, a next page is assigned to the right button switch portion 16c, and a next document is assigned to the lower button switch portion 16d (step S165). The CPU 20 functions as an operation assignment control part. That is, the CPU 20 performs the assignment of control contents corresponding to operation directions of the cross button switch 16 (cross operation part) based on the orientation information (image kind information) corresponding to image data of an image to be displayed on the display region 14a and dominant hand setting (operation mode) which is already set. Further, the CPU 20 performs a control of keeping display of raster data on a predetermined page in a designated document (step S166), and the main subroutine is finished. The CPU 20 functions as a display control part. That is, in case the orientation information (image kind information) corresponding to image data of an image to be displayed on the display region 14a is a landscape (second kind image information), when the dominant hand setting is set as the right hand (the right-hand operation mode), the CPU 20 can perform a control of displaying the image at an angle which allows a user to observe the display region in a holding mode in which the cross button switch 16 (operation part, cross operation part) is positioned on a user's side of the housing 12.

On the other hand, when the CPU 20 determines that dominant hand setting is set as the left hand (step S153: NO), the CPU 20 performs setting of button switches such that a previous page is assigned to the left button switch portion 16a, a previous document is assigned to the upper button switch portion 16b, a next page is assigned to the right button switch portion 16c, and a next document is assigned to the lower button switch portion 16d (step S167). The CPU 20 functions as an operation assignment control part. That is, the CPU 20 performs the assignment of control contents corresponding to operation directions of the cross button switch 16 (cross operation part) based on the orientation information (image kind information) corresponding to image data of an image to be displayed on the display region 14a and dominant hand setting (operation mode) which is already set. Further, the CPU 20 performs a control of keeping display of raster data on a predetermined page in a designated document (step S166), and the main subroutine is finished. The CPU 20 functions as a display control part. That is, in case the orientation information (image kind information) corresponding to image data of an image to be displayed on the display region 14a is a landscape (second kind image information), when the dominant hand setting is set as the left hand (the left-hand operation mode), the CPU 20 can perform a control of displaying the image at an angle which allows a user to observe the display region in a holding mode in which the cross button switch 16 (operation part) is positioned on a left side of the housing 12.

In this manner, by displaying the image at the angle which makes the operation part positioned on a left or right side or a user' s side corresponding to the operation mode based on the operation mode indicative of the dominant hand or the like and the image kind information of the image which displays an image having different longitudinal and lateral lengths or the like, it is possible to prevent the operation part frombeing positioned on a deep side of the display region thus enhancing the operability of the terminal device 10. Further, by assigning the control contents corresponding to the image kind information and the operation modes, the operation of the terminal device 10 can be simplified.

### (Explanation of processing flow in accordance with printer driver program 43 in personal computer 31)

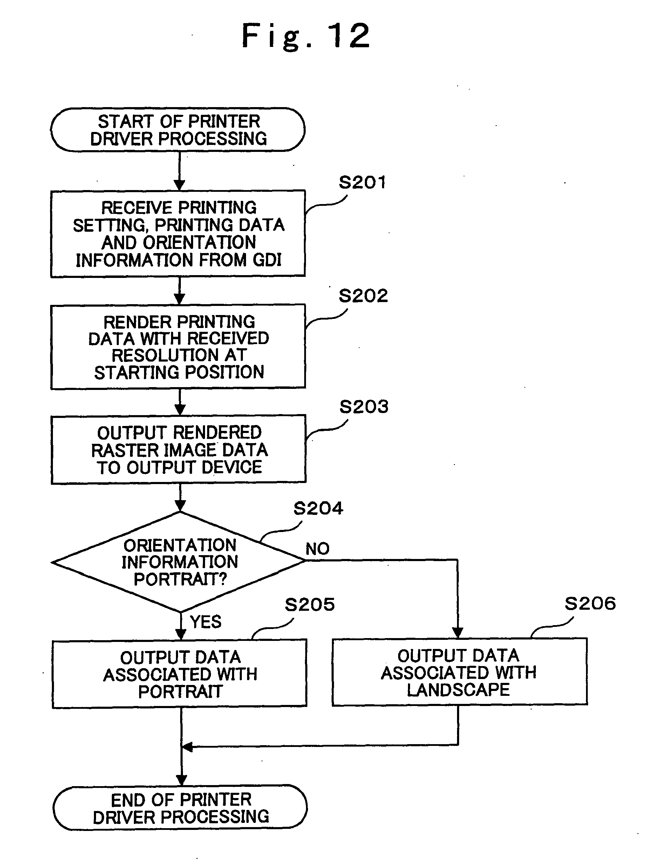

Processing in accordance with a printer driver program 43 in the personal computer 31 is explained hereinafter in conjunction with Fig. 12.

Firstly, as shown in Fig. 12, the control part 40 which performs a control in accordance with the printer driver program 43 receives printing setting, printing data and the orientation information from the GDI 42 (step S201). Then, the control part 40 renders the printing data with received resolution at a starting position (step S202), and outputs the rendered raster image data to the output device (step S203). Subsequently, the control part 40 reads out the orientation information corresponding to the raster data, and determines whether or not the orientation information is a portrait (step S204). When the control part 40 determines that the orientation information is the portrait (step S204: YES), the control part 40 outputs data in a form that the data outputted from the output device is associated with the portrait (step S205). When the control part 40 determines that the orientation information is a landscape (step S204: NO), the control part 40 outputs the data in a form that the landscape is associated with the data outputted from the output device (step S206). Then, this processing is finished.

In this manner, the personal computer 31 outputs the image data (raster image data) of the image to be displayed on the display region 14a of the terminal device 10 to the terminal device 10 in a form that the image kind information (orientation information) is added to the image data. Accordingly, by merely outputting the image data to the terminal device 10 from the personal computer 31, it is possible to easily form the image data used by the terminal device 10.

In the above-mentioned embodiment, when the orientation information is the portrait, the key assignment is performed such that the control contents corresponding to the operation direction of the cross button switch 16 become the same between a case in which the dominant hand setting is set as the right hand and the terminal device 10 is held such that the cross button switch 16 is positioned on a right side of the housing 12 and a case in which the dominant hand setting is set as the left hand and the terminal device 10 is held such that the cross button switch 16 is positioned on a left side of the housing 12. However, the present invention is not limited to such key assignment. For example, when the orientation information is the landscape, the key assignment may be performed such that the control contents corresponding to the operation direction of the cross button switch 16 become the same between a case in which the dominant hand setting is set as the right hand and the terminal device 10 is held such that the cross button switch 16 is positioned on a user's side of the housing 12 and a case in which the dominant hand setting is set as the left hand and the terminal device 10 is held such that the cross button switch 16 is positioned on a user's side of a housing 12.

### (Second embodiment)

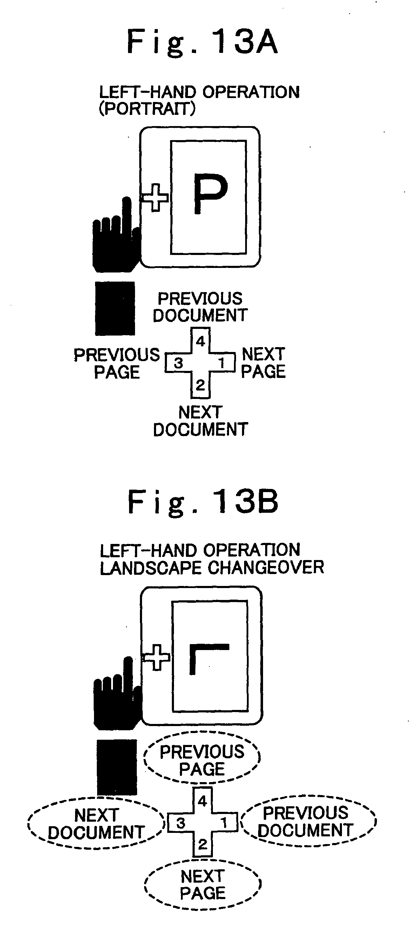

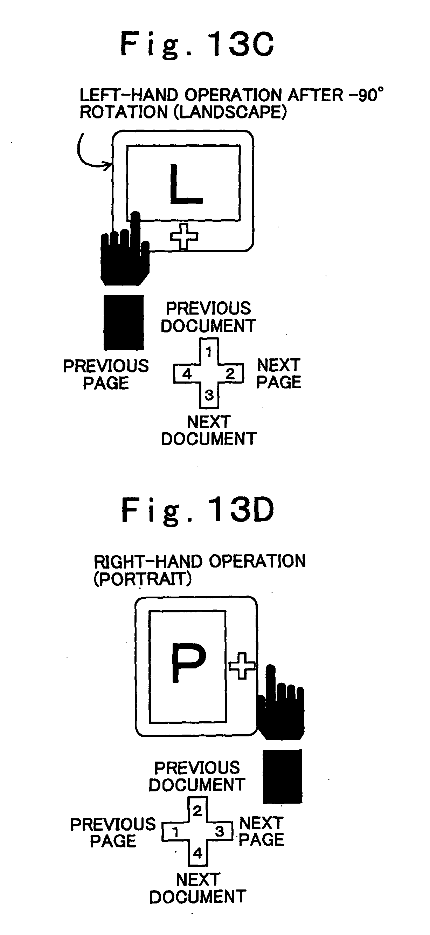

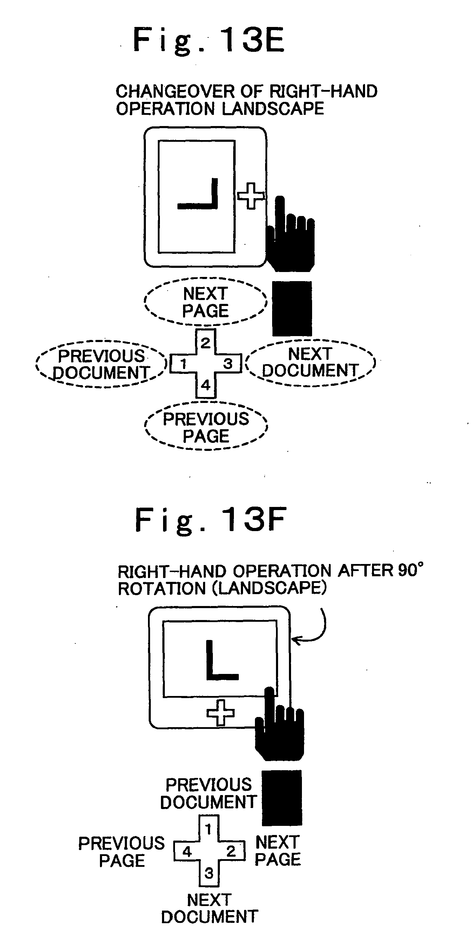

One specific embodiment of the terminal device 10 is explained hereinafter in conjunction with Fig. 13 to Fig. 15. For facilitating the understanding of the invention, technical features different from the above-mentioned embodiment are explained in detail and the explanation of the same technical features is omitted.

When a left-hand operation is set and an image to be displayed is a portrait image, as shown in Fig. 13A, a next page is assigned to the left button switch portion 16a, a next document is assigned to the upper button switch portion 16b, a previous page is assigned to the right button switch portion 16c, and a previous document is assigned to the lower button switch portion 16d. Further, the previous page is displayed when the user operates the cross button switch 16 in the left direction, the previous document is displayed when the user operates the cross button switch 16 in the upper direction, the next page is displayed when the user operates the cross button switch 16 in the right direction, and the next document is displayed when the user operates the cross button switch 16 in the lower direction.

Then, when the image to be displayed is changed to a landscape, as shown in Fig. 13B, the image per se is rotated by 90 degrees. Further, a previous document is assigned to the left button switch portion 16a, a next page is assigned to the upper button switch portion 16b, a next document is assigned to the right button switch portion 16c, and a previous page is assigned to the lower button switch portion 16d. Accordingly, when the housing 12 is rotated by -90 degrees as shown in Fig. 13C for allowing a user to observe the image, the terminal device 10 assumes a holding mode in which the cross button switch 16 is positioned on a user's side of the housing 12. Then, the previous page is displayed when the user operates the cross button switch 16 in the left direction, the previous document is displayed when the user operates the cross button switch 16 in the upper direction, the next page is displayed when the user operates the cross button switch 16 in the right direction, and the next document is displayed when the user operates the cross button switch 16 in the lower direction.

Further, when a right-hand operation is set and an image to be displayed is a portrait image, as shown in Fig. 13D, a previous page is assigned to the left button switch portion 16a, a previous document is assigned to the upper button switch portion 16b, a next page is assigned to the right button switch portion 16c, and a next document is assigned to the lower button switch portion 16d. Further, the previous page is displayed when the user operates the cross button switch 16 in the left direction, the previous document is displayed when the user operates the cross button switch 16 in the upper direction, the next page is displayed when the user operates the cross button switch 16 in the right direction, and the next document is displayed when the user operates the cross button switch 16 in the lower direction.

Then, when the image to be displayed is changed to a landscape, as shown in Fig. 13E, the image per se is rotated by -90 degrees. Further, a previous document is assigned to the left button switch portion 16a, a next page is assigned to the upper button switch portion 16b, a next document is assigned to the right button switch portion 16c, and a previous page is assigned to the lower button switch portion 16d. Accordingly, when the housing 12 is rotated by 90 degrees as shown in Fig. 13F for allowing a user to observe the image, the terminal device 10 assumes a holding mode in which the cross button switch 16 is positioned on a user's side of the housing 12. Then, the previous page is displayed when the user operates the cross button switch 16 in the left direction, the previous document is displayed when the user operates the cross button switch 16 in the upper direction, the next page is displayed when the user operates the cross button switch 16 in the right direction, and the next document is displayed when the user operates the cross button switch 16 in the lower direction.

### (Key assignment setting table)

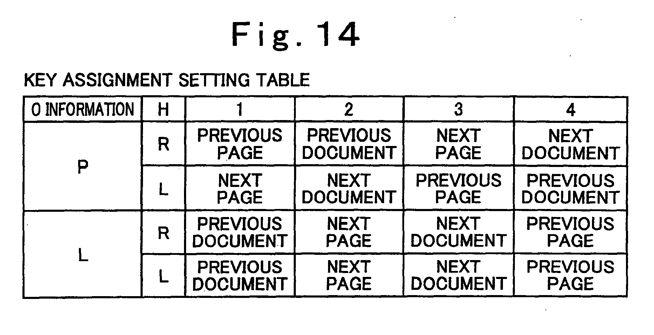

Further, in the above-mentioned key assignment setting table, as shown in Fig. 14, when the orientation information is a portrait and a dominant hand setting is set as a right hand, a previous page is assigned to the left button switch portion 16a, a previous document is assigned to the upper button switch portion 16b, a next page is assigned to the right button switch portion 16c, and a next document is assigned to the lower button switch portion 16d. Further, when the orientation information is a portrait and a dominant hand setting is set as a left hand, a next page is assigned to the left button switch portion 16a, a next document is assigned to the upper button switch portion 16b, a previous page is assigned to the right button switch portion 16c, and a previous document is assigned to the lower button switch portion 16d. When the orientation information is a landscape, irrespective of whether the dominant hand setting is set as the right hand or the left hand, a previous document is assigned to the left button switch portion 16a, a next page is assigned to the upper button switch portion 16b, a next document is assigned to the right button switch portion 16c, and a previous page is assigned to the lower button switch portion 16d.

### (Explanation of display updating processing flow of terminal device 10)

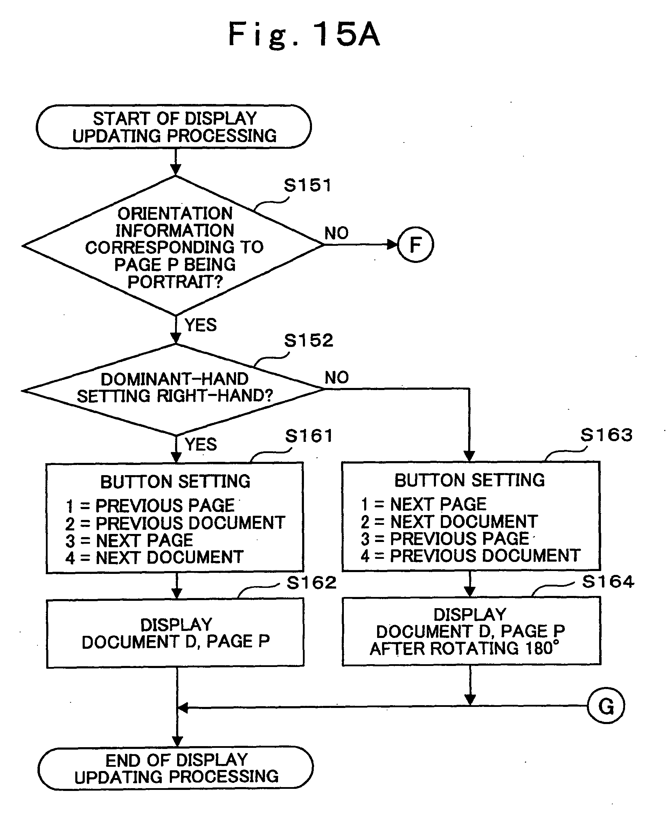

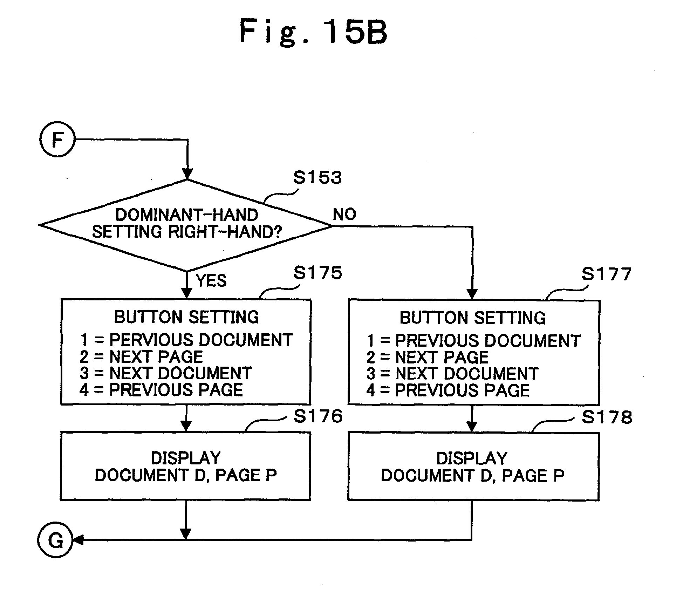

A subroutine executed in step S93 shown in Fig. 10 is explained in conjunction with Fig. 15.

As shown in Fig. 15, when the CPU 20 determines that the orientation information corresponding to the current page is a landscape (step S151: NO) and the dominant hand setting is set as the right hand (step S153: YES), button switch setting is performed such that a previous document is assigned to the left button switch portion 16a, a next page is assigned to the upper button switch portion 16b, a next document is assigned to the right button switch portion 16c, and a previous page is assigned to the lower button switch portion 16d (step S175). The CPU 20 functions as an operation assignment control part. That is, the CPU 20 performs assignment of control contents corresponding to the operation direction of the cross button switch 16 (cross operation part) based on the orientation information (image kind information) corresponding to image data of an image to be displayed on the display region 14a and dominant hand setting (operation mode) which is already set. Then, the CPU 20 performs a control of keeping display of raster data on a predetermined page of a designated document (step S176), and this subroutine is finished. The CPU 20 functions as a display control part. That is, in case the orientation information (image kind information) corresponding to image data of an image to be displayed on the display region 14a is a landscape (second kind image information), when the dominant hand setting is set as the right hand (the right-hand operation mode), the CPU 20 can perform a control of displaying the image at an angle which allows a user to observe the display region in a holding mode in which the cross button switch 16 (operation part) is positioned on a user's side of the housing 12.

Further, when the CPU 20 determines that the orientation information corresponding to the current page is a landscape (step S151: NO) and the dominant hand setting is set as the left hand (step S153: NO), button switch setting is performed such that a previous document is assigned to the left button switch portion 16a, a next page is assigned to the upper button switch portion 16b, a next document is assigned to the right button switch portion 16c, and a previous page is assigned to the lower button switch portion 16d (step S177). The CPU 20 functions as an operation assignment control part. That is, the CPU 20 performs assignment of control contents corresponding to the operation direction of the cross button switch 16 (cross operation part) based on the orientation information (image kind information) corresponding to image data of an image to be displayed on the display region 14a and dominant hand setting (operation mode) which is already set. Then, the CPU 20 performs a control of keeping display of raster data on a predetermined page of a designated document (step S178), and this subroutine is finished. The CPU 20 functions as a display control part. That is, in case the orientation information (image kind information) corresponding to image data of an image to be displayed on the display region 14a is a landscape (second kind image information), when the dominant hand setting is set as the left hand (the left-hand operation mode), the CPU 20 can perform a control of displaying the image at an angle which allows a user to observe the display region in a holding mode in which the cross button switch 16 (operation part) is positioned on a user's side of the housing 12.

By changing the key assignment in this manner, the CPU 20 can perform the assignment of control content corresponding to the kind of the image (image kind information such as portrait or landscape) and the operation mode thus simplifying the control of the terminal device 10. Further, the user can operate the terminal device 10 without being conscious of the holding mode and hence, operability of the terminal device 10 can be enhanced. Further, the control contents corresponding to the operation direction of the cross button switch 16 become the same between the case in which the orientation information (image kind information) corresponding to the image data of the image to be displayed in the display region 14a is the portrait (first kind image) and the terminal device 10 is held in a holding mode in which the cross button switch 16 is positioned on a right side of the housing 12, and a case in which the orientation information (image kind information) corresponding to the image data of the image to be displayed in the display region 14a is the landscape (second kind image) and the terminal device 10 is held in a holding mode in which the cross button switch 16 is positioned on a user's side of the housing 12. Accordingly, the user can operate the terminal device 10 without being conscious of the holding mode of the cross button switch 16 and hence, the operability of the terminal device 10 can be enhanced.

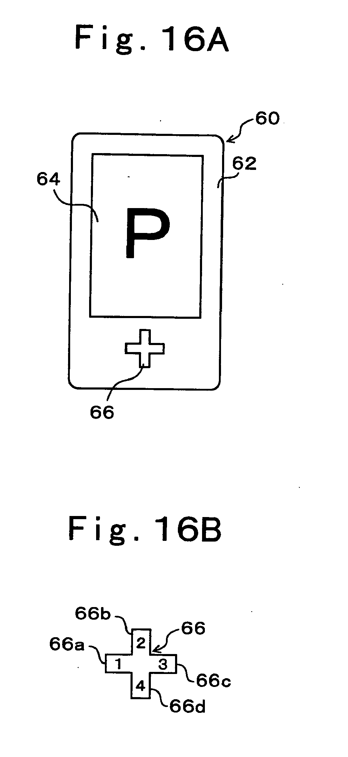

Further, in the above-mentioned embodiment, the cross button switch 16 is arranged along the long side of the display region 14a. However, the present invention is not limited to such an arrangement. For example, as shown in Fig. 16, the cross button switch 66 may be arranged along a short side of the display region 64a.

### (Third embodiment)

One specific embodiment of the terminal device 10 is explained hereinafter in conjunction with Fig. 16 to Fig. 19. For facilitating the understanding of the invention, technical features different from the above-mentioned embodiment are explained in detail and the explanation of the same technical features is omitted.

The cross button switch 66 is mounted on at least one end of the housing 62 and, at the same time, is arranged along a short side of the display region 64a of the display part 64. The cross button switch 66 is a button switch which is operable in the upper, lower, left and right directions, and is constituted of, as shown in Fig. 16B, a left button switch portion 66a, an upper button switch portion 66b, a right button switch portion 66c and a lower button switch portion 66d.

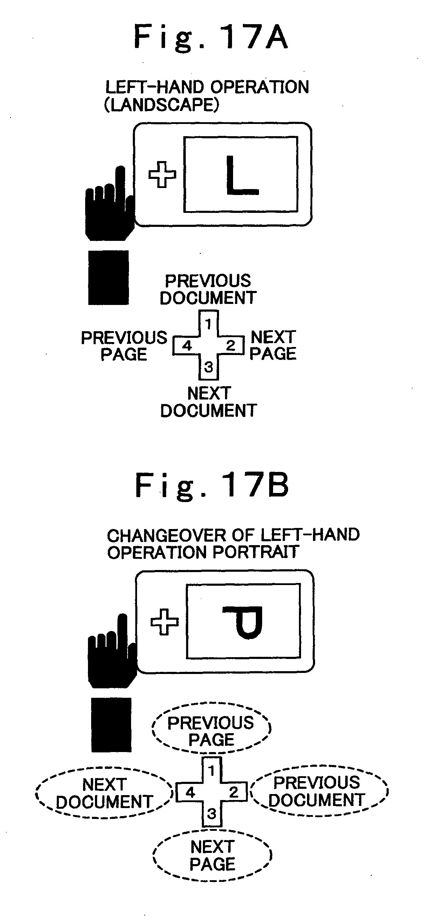

Further, when a left-hand operation is set and an image to be displayed is a landscape image, as shown in Fig. 17A, a previous document is assigned to the left button switch portion 66a, a next page is assigned to the upper button switch portion 66b, a next document is assigned to the right button switchportion 66c, and a previous page is assigned to the lower button switch portion 66d. Further, the previous page is displayed when the user operates the cross button switch 66 in the left direction, the previous document is displayed when the user operates the cross button switch 66 in the upper direction, the next page is displayed when the user operates the cross button switch 66 in the right direction, and the next document is displayed when the user operates the cross button switch 66 in the lower direction.

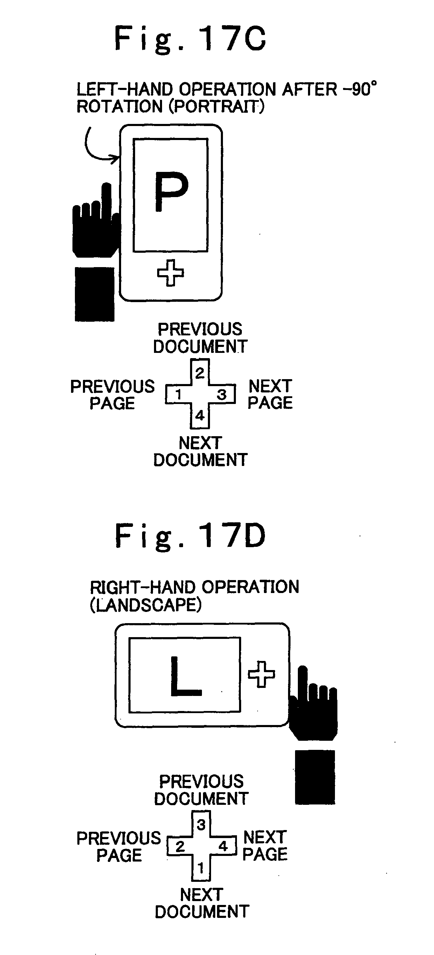

Then, when the image to be displayed is changed to a portrait, as shown in Fig. 17B, the image per se is rotated by 90 degrees. Further, a previous page is assigned to the left button switch portion 66a, a previous document is assigned to the upper button switch portion 66b, a next page is assigned to the right button switch portion 66c, and a next document is assigned to the lower button switch portion 66d. Accordingly, when the housing 62 is rotated by -90 degrees as shown in Fig. 17C for allowing a user to observe the image, the terminal device 10 assumes a holding mode in which the cross button switch 66 is positioned on a user's side of the housing 62. Then, the previous page is displayed when the user operates the cross button switch 66 in the left direction, the previous document is displayed when the user operates the cross button switch 66 in the upper direction, the next page is displayed when the user operates the cross button switch 66 in the right direction, and the next document is displayed when the user operates the cross button switch 66 in the lower direction.

Further, when a right-hand operation is set and an image to be displayed is a landscape image, as shown in Fig. 17D, a next document is assigned to the left button switch portion 66a, a previous page is assigned to the upper button switch portion 66b, a previous document is assigned to the right button switch portion 66c, and a next page is assigned to the lower button switch portion 66d. Further, the previous page is displayed when the user operates the cross button switch 66 in the left direction, the previous document is displayed when the user operates the cross button switch 66 in the upper direction, the next page is displayed when the user operates the cross button switch 66 in the right direction, and the next document is displayed when the user operates the cross button switch 66 in the lower direction.

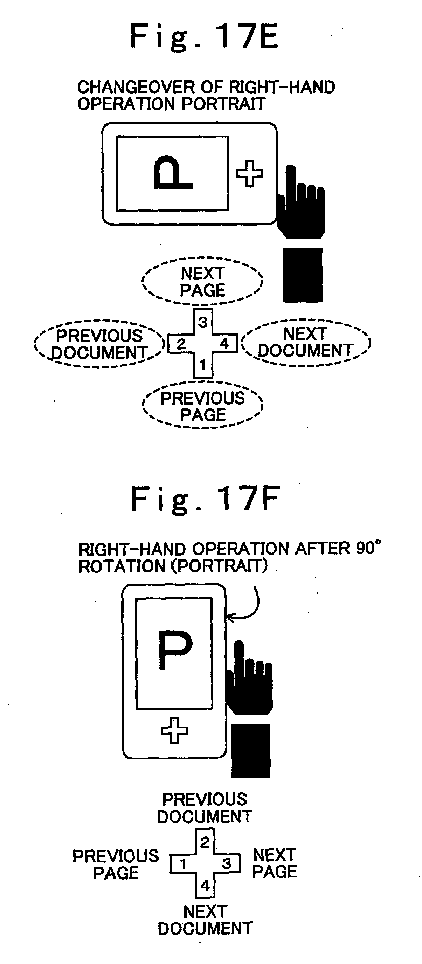

Then, when the image to be displayed is changed to a portrait, as shown in Fig. 17E, the image per se is rotated by -90 degrees. Further, a previous page is assigned to the left button switch portion 66a, a previous document is assigned to the upper button switch portion 66b, a next page is assigned to the right button switch portion 66c, and a next document is assigned to the lower button switch portion 66d. Accordingly, when the housing 62 is rotated by 90 degrees as shown in Fig. 17F for allowing a user to observe the image, the terminal device 10 assumes a holding mode in which the cross button switch 66 is positioned on a user's side of the housing 62. Then, the previous page is displayedwhen the user operates the cross button switch 66 in the left direction, the previous document is displayed when the user operates the cross button switch 66 in the upper direction, the next page is displayed when the user operates the cross button switch 66 in the right direction, and the next document is displayed when the user operates the cross button switch 66 in the lower direction.

### (Key assignment setting table)

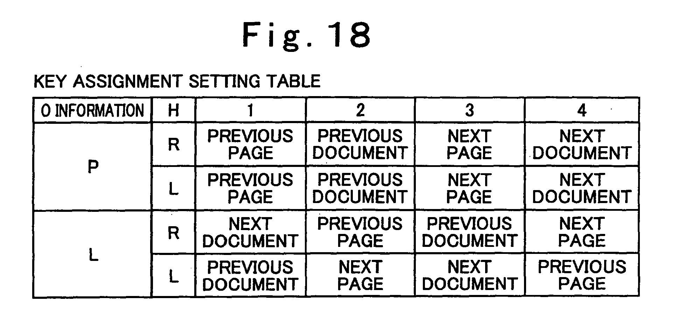

Further, in the above-mentioned key assignment setting table, as shown in Fig. 18, when the orientation information is a portrait, irrespective of whether the dominant hand setting is set as the right hand or the left hand, a previous page is assigned to the left button switch portion 66a, a previous document is assigned to the upper button switch portion 66b, a next page is assigned to the right button switch portion 66c, and a next document is assigned to the lower button switch portion 66d. Further, when the orientation information is a landscape and the dominant hand setting is set as the right hand, a next document is assigned to the left button switch portion 66a, a previous page is assigned to the upper button switch portion 66b, a previous document is assigned to the right button switch portion 66c, and a next document is assigned to the lower button switch portion 66d. When the orientation information is a landscape and the dominant hand setting is set as the left hand, a previous document is assigned to the left button switch portion 66a, a next page is assigned to the upper button switch portion 66b, a next document is assigned to the right button switch portion 66c, and a previous page is assigned to the lower button switch portion 66d.

Further, by referencing this raster data setting table, it is possible to recognize the raster data per se, the orientation information of the raster data or the like. The EEPROM 23 functions as an image data memory part. That is, in the EEPROM 23, either one of the portrait image (longitudinally-elongated image data, the second kind image information) which is observed by the user in a holding mode in which the cross button switch 16 (operation part, cross operation part) is positioned on either one of left and right sides of the housing 12, and the landscape image (laterally-elongated image data, the first kind image information) which is observed by the user in a holding mode in which the cross button switch 16 is positioned on a deep side of the housing 12 is stored as the orientation information (image kind information) corresponding to each image data.

### (Explanation of display updating processing flow of terminal

### device 10)

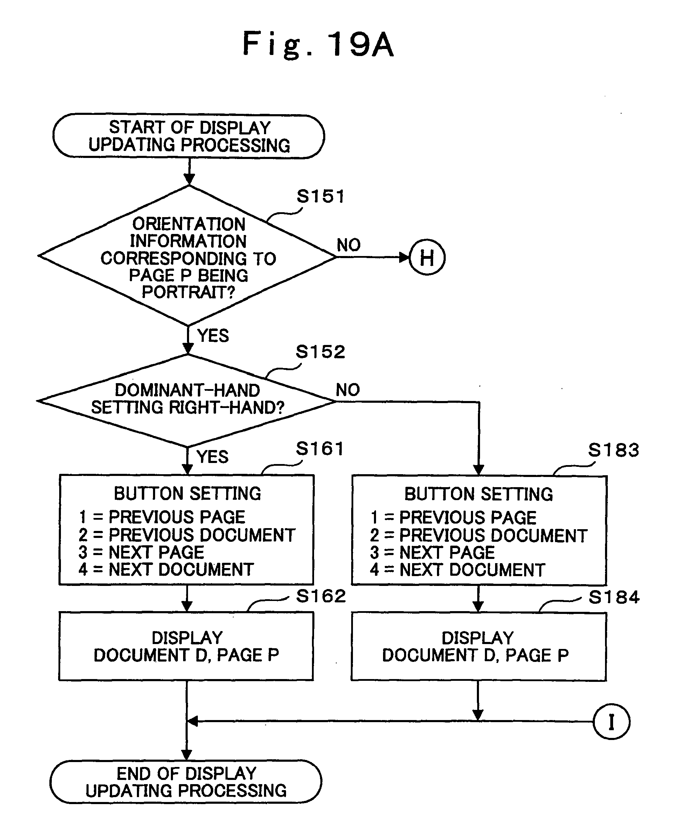

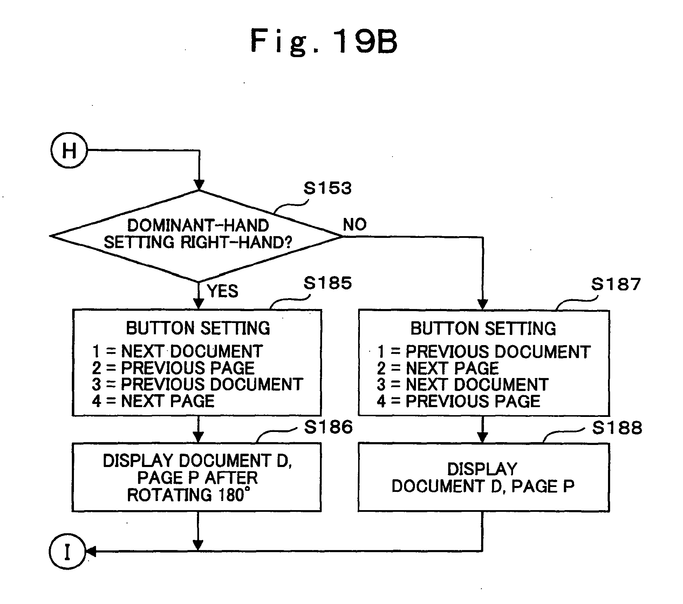

A subroutine executed in step S93 shown in Fig. 10 is explained in conjunction with Fig. 19.

As shown in Fig. 19, when the CPU 20 determines that the orientation information corresponding to the current page is a portrait (step S151: YES) and the dominant hand setting is set as the left hand (step S152: NO), button switch setting is performed such that a previous page is assigned to a left button switch portion 66a, a previous document is assigned to an upper button switch portion 66b, a next page is assigned to the right button switch portion 66c, and a next document is assigned to the lower button switch portion 66d (step S183). The CPU 20 functions as an operation assignment control part. That is, the CPU 20 performs assignment of control contents corresponding to the operation direction of the cross button switch 16 (cross operation part) based on the orientation information (image kind information) corresponding to image data of an image to be displayed on a display region 14a and dominant hand setting (operation mode) which is already set. Then, the CPU 20 performs a control of keeping display of raster data on a predetermined page of a designated document (step S184), and this subroutine is finished. The CPU 20 functions as a display control part. That is, in case the orientation information (image kind information) corresponding to image data of an image to be displayed on the display region 14a is a portrait (second kind image information), when the dominant hand setting is set as the left hand (left hand operation mode), the CPU 20 performs a control of displaying an image at an angle which allows a user to observe the display region in a holding mode in which the cross button switch 16 (operation portion) is positioned on a left side of the housing 12.

When the CPU 20 determines that the orientation information corresponding to the current page is a landscape (step S151: NO) and the dominant hand setting is set as the right hand (step S153: YES), button switch setting is performed such that a next document is assigned to the left button switch portion 66a, a previous page is assigned to the upper button switch portion 66b, a previous document is assigned to the right button switch portion 66c, and a next page is assigned to the lower button switch portion 66d (step S185). The CPU 20 functions as an operation assignment control part. That is, the CPU 20 performs assignment of control contents corresponding to the operation direction of the cross button switch 16 (cross operation part) based on the orientation information (image kind information) corresponding to image data of an image to be displayed on the display region 14a and dominant hand setting (operation mode) which is already set. Then, the CPU 20 performs a control of displaying raster data on a predetermined page of a designated document by rotating 180 degrees (step S186), and this subroutine is finished. The CPU 20 functions as a display control part. That is, in case the orientation information (image kind information) corresponding to image data of an image to be displayed on the display region 14a is a landscape (first kind image information), when the dominant hand setting is set as the right hand (the right-hand operation mode), the CPU 20 can perform a control of displaying the image at an angle which allows a user to observe the display region in a holding mode in which the cross button switch 16 (operation part) is positioned on a right side of the housing 12.

Further, when the CPU 20 determines that the orientation information corresponding to the current page is a landscape (step S151: NO) and the dominant hand setting is set as the left hand (step S153: NO), button switch setting is performed such that a previous document is assigned to the left button switch portion 66a, a next page is assigned to the upper button switch portion 66b, a next document is assigned to the right button switch portion 66c, and a previous page is assigned to the lower button switch portion 66d (step S187). The CPU 20 functions as an operation assignment control part. That is, the CPU 20 performs assignment of control contents corresponding to the operation direction of the cross button switch 16 (cross operation part) based on the orientation information (image kind information) corresponding to image data of an image to be displayed on the display region 14a and dominant hand setting (operation mode) which is already set. Then, the CPU 20 performs a control of keeping display of raster data on a predetermined page of a designated document (step S188), and this subroutine is finished. The CPU 20 functions as a display control part. That is, in case the orientation information (image kind information) corresponding to image data of an image to be displayed on the display region 14a is a landscape (first kind image information), when the dominant hand setting is set as the left hand (the left-hand operation mode), the CPU 20 can perform a control of displaying the image at an angle which allows a user to observe the display region in a holding mode in which the cross button switch 16 (operation part) is positioned on a left side of the housing 12.

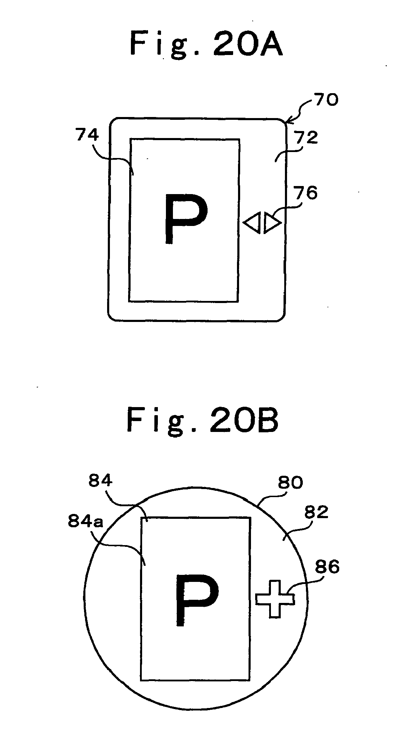

Further, although the above-mentioned embodiments adopt the terminal device 10 which includes the cross button switch 16, the present invention is not limited to such constitution. For example, as shown in Fig. 20A, the terminal device 10 may include a button switch 76 which is operable in the lateral direction (or vertical direction). Further, in the above-mentioned embodiments, both of the housing 12 and the display region 14a of the display device 14 have a rectangular shape. However, the present invention is not limited to such a shape. For example, as shown in Fig. 20B, in case a display region 84a of a display device 84 is formed in a rectangular shape, the housing 82 per se may be formed in a circular shape in place of a rectangular shape.

## Claims

1. A terminal device comprising:
a housing;
an image data memory part which is configured to store image data;
a display part which is mounted on the housing and has a display region whose long-side length and short-side length differ from each other;
a display control part which is configured to perform a control of displaying an image on the display region based on the image data in the image data memory part; and
an operation part which is mounted on at least one end of the housing, is arranged along at least one side of the display region, and is configured to be operable by a user, wherein
the operation part includes an operation mode setting part which is configured to set either one of a right-hand operation mode in which the operation part is operated by a right hand of the user and a left-hand operation mode in which the operation part is operated by a left hand of the user,
the image data memory part is configured to store, as image kind information, either one of first-kind image information which allows the user to observe the image in a holding mode in which the operation part is positioned on either one of left and right sides of the housing and second-kind image information which allows the user to observe the image in a holding mode in which the operation part is positioned on a deep side of the housing corresponding to the respective image data;
the display control part is, in a state in which the image kind information which corresponds to the image data of an image to be displayed on the display region is the first-kind image information and the right-hand operation mode is set by the operation mode setting part, configured to perform a control of displaying the image at an angle which allows the user to observe the image in the holding mode in which the operation part is positioned on a right side of the housing,
the display control part is, in a state in which the image kind information which corresponds to the image data of an image to be displayed on the display region is the first-kind image information and the left-hand operation mode is set by the operation mode setting part, configured to perform a control of displaying the image at an angle which allows the user to observe the image in the holding mode in which the operation part is positioned on a left side of the housing, and
the display control part is, in a state in which the image kind information which corresponds to the image data of an image to be displayed on the display region is the second-kind image information and either one of the right-hand operation mode and the left-hand operation mode is set by the operation mode setting part, configured to perform a control of displaying the image at an angle which allows the user to observe the image in the holding mode in which the operation part is positioned on a user's side of the housing.

2. A terminal device according to claim 1, wherein the operation part is configured to perform plural kinds of operations corresponding to operation modes of the user, and includes an operation assignment control part which performs assignment of control contents corresponding to the operation modes of the operation part based on the image kind information corresponding to the image data of the image to be displayed on the display region and the operation modes set by the operation mode setting part.

3. A terminal device according to claim 2, wherein the operation part is a cross operation part which is configured to be operable at least in crosswise directions, and the operation assignment control part is configured to perform the assignment of the control contents corresponding to the operation directions of the cross operation part based on the image kind information corresponding to the image data of the image to be displayed on the display region and the operation modes set by the operation mode setting part.

4. A terminal device according to claim 3, wherein the operation assignment control part is configured to perform the assignment such that the control contents corresponding to the operation directions of the cross operation part become equal between a state in which the image kind information which corresponds to the image data of an image to be displayed on the display region is the first-kind image information and the terminal device is held in a holding mode in which the operation part is positioned on either one of left and right sides of the housing and a state in which the image kind information which corresponds to the image data of an image to be displayed on the display region is the second-kind image information and the terminal device is held in a holding mode in which the operation part is positioned on a user's side of the housing.

5. A terminal device according to any one of claims 1 to 4, wherein the operation part is arranged along a long side of the display region, and the image datamemorypart is configured to store longitudinally-elongated image data corresponding to the first-kind image information and laterally-elongated image data corresponding to the second-kind image information.

6. A terminal device according to any one of claims 1 to 4, wherein the operation part is arranged along a short side of the display region, and the image data memory part is configured to store laterally-elongated image data corresponding to the first-kind image information and longitudinally-elongated image data corresponding to the second-kind image information.

7. A terminal system comprising:
a terminal device; and
a computer which is configured to output image data to the terminal device, wherein
the terminal device includes:
a housing;
an image data memory part which is configured to store image data;
a display part which is mounted on the housing and has a display region whose long-side length and short-side length differ from each other;
a display control part which is configured to perform a control of displaying an image on the display region based on the image data in the image data memory part; and
an operation part which is mounted on at least one end of the housing, is arranged along at least one side of the display region, and is configured to be operable by a user, wherein
the operation part includes an operation mode setting part which is configured to set either one of a right-hand operation mode in which the operation part is operated by a right hand of the user and a left-hand operation mode in which the operation part is operated by a left hand of the user,
the image data memory part is configured to store, as image kind information, either one of first-kind image information which allows the user to observe the image in a holding mode in which the operation part is positioned on either one of left and right sides of the housing and second-kind image information which allows the user to observe the image in a holding mode in which the operation part is positioned on a deep side of the housing corresponding to the respective image data;
the display control part is, in a state in which the image kind information which corresponds to the image data of an image to be displayed on the display region is the first-kind image information and the right-hand operation mode is set by the operation mode setting part, configured to perform a control of displaying the image at an angle which allows the user to observe the image in the holding mode in which the operation part is positioned on a right side of the housing,
the display control part is, in a state in which the image kind information which corresponds to the image data of an image to be displayed on the display region is the first-kind image information and the left-hand operation mode is set by the operation mode setting part, configured to perform a control of displaying the image at an angle which allows the user to observe the image in the holding mode in which the operation part is positioned on a left side of the housing, and
the display control part is, in a state in which the image kind information which corresponds to the image data of an image to be displayed on the display region is the second-kind image information and either one of the right-hand operation mode and the left-hand operation mode is set by the operation mode setting part, configured to perform a control of displaying the image at an angle which allows the user to observe the image in the holding mode in which the operation part is positioned on a user' s side of the housing, and
the computer is configured to output the image data of the image to be displayed on the display region of the terminal device to the terminal device in a state that the image kind information is added to the image data.

8. A computer-readable recording medium recording a program for making a computer execute the steps comprising:
receiving printing data;
forming image data by rendering the printing data;
associating image kind information used in the terminal device with the image data, wherein the terminal device includes a housing, a display part which is mounted on the housing and has a display region whose long-side length and short-side length differ from each other, a display control part which is configured to perform a control of displaying an image on the display region based on the image data, and an operation part which is mounted on at least one end of the housing, is arranged along at least one side of the display region, and is configured to be operable by a user, and the image kind information is either one of first-kind image information which allows the user to observe the image in a holding mode in which the operation part is positioned on a side of the housing and second-kind image information which allows the user to observe the image in a holding mode in which the operation part is positioned on a deep side of the housing, and
outputting the image data with which the image kind information is associated to the terminal device.
